Europäisches Patentamt

European Patent Office

Office européen des brevets

(11) Veröffentlichungsnummer: **0 520 081 A1**

# (12) EUROPÄISCHE PATENTANMELDUNG

(21) Anmeldenummer: **91110742.3**

(22) Anmeldetag: **28.06.91**

(51) Int. Cl.5: **G01L 5/16**, G01M 9/00

(43) Veröffentlichungstag der Anmeldung:
**30.12.92 Patentblatt 92/53**

(84) Benannte Vertragsstaaten:
**AT BE CH DE DK ES FR GB GR IT LI LU NL SE**

(71) Anmelder: **CARL SCHENCK AG**
**Landwehrstrasse 55 Postfach 40 18**
**W-6100 Darmstadt(DE)**

(72) Erfinder: **Polansky-Schmülling-Ziegert,**
**Lubomir**
**Am Schäffgraben 7**
**W-6944 Hemsbach(DE)**
Erfinder: **Schumacher, Wolfgang**
**Zwingenberger Strasse 31**
**W-6104 Seeheim-Jugenheim(DE)**

(74) Vertreter: **Brandt, Ernst-Ulrich**
**Fa. Carl Schenck AG Patentabteilung**
**Landwehrstrasse 55 Postfach 40 18**
**W-6100 Darmstadt 1(DE)**

(54) **Vorrichtung zur Bestimmung von Kräften und Momenten.**

(57) Es wird eine Vorrichtung zur Bestimmung von Kräften und Momenten, insbesondere eine Windkanalwaage, mit einer Plattform (1), die über Kraftsensoren (R1, R2, R4) an einem Fundament oder an einem Grundgestell abgestützt ist, vorgeschlagen, wobei zur Entkopplung der Kräfte von den Momenten vorgesehen ist, daß die Lagerung der Plattform (1) über drei Kraftsensoren (R1, R2, R4) erfolgt, deren jeweilige Hauptwirkungslinien durch einen gemeinsamen Bezugspunkt (P) führen, wobei von diesen drei Hauptwirkungslinien nur zwei in einer gemeinsamen Ebene liegen, daß ferner in drei nicht parallelen Ebenen, die keine gemeinsame Schnittlinie besitzen, je eine erste und eine zweite Parallellenkeranordnung (8a, 8b, 8c; 9a, 9b, 9c), welche durch ein biegesteifes Element (7a, 7b, 7c) gekoppelt sind, vorgesehen ist, wobei die erste Parallellenkeranordnung (8a, 8b, 8c) jeweils an der Plattform (1) und die zweite Parallellenkeranordnung (9a, 9b, 9c) jeweils am Fundament oder Grundgestell befestigt ist, und wobei mindestens einem Lenkerelement ein Kraftsensor (R3, R5, R6) zugeordnet ist.

Figur 1

Die Erfindung betrifft eine Vorrichtung zur Bestimmung von Kräften und Momenten, mit einer Plattform, die über Kraftsensoren an einem Fundament oder an einem Grundgestell abgestützt ist. Derartige Vorrichtungen werden insbesondere als Windkanalwaagen eingesetzt und dienen der Ermittlung der Eigenschaften von angeströmten Gegenständen, insbesondere von Fahrzeugen. Charakteristische Kenngrößen sind dabei das Gier-, Nick- und Rollmoment sowie die Widerstandskraft, die Seiten- und die Auftriebskraft.

Eine derartige Vorrichtung ist aus der DE 26 24 647 A 1 bekannt, bei der die Plattform über mehrere Zwischenrahmen auf Wägezellen abgestützt ist. Dabei ist es nachteilig, daß sowohl die Momente als auch die Kräfte durch die selben Kraftsensoren bestimmt werden sollen. Dies führt nämlich zu einer gegenseitigen Beeinflussung der Momenten- und Kräftemessung, so daß durch sogenannte "parasitäre Meßanteile" eine unerwünschte Fehlervergrößerung bewirkt wird, wodurch mit der bekannten Vorrichtung keine genauen Messungen durchführbar sind.

Zur Vermeidung dieser Nachteile wurde in der DE 29 26 213 A 1 eine Pyramidenwaage vorgeschlagen, die einen Kräfte- und einen Momentenrahmen aufweist, durch welche die Kräfte von dem Momenten entkoppelt sind. Zwar lassen sich mit dieser Waagenanordnung exakte Messungen durchführen, aber durch die Anzahl der benötigten Kraftsensoren und durch die aufwendige Konstruktion ist diese Anordnung vergleichsweise kostenintensiv.

Der Erfindung liegt daher die Aufgabe zugrunde, eine gattungsgemäße Vorrichtung zu schaffen, die zum einen exakte Kräfte und Momentenmessungen erlaubt und zum anderen einfach im Aufbau und kostengünstig herstellbar ist. Diese Aufgabe wird erfindungsgemäß durch die kennzeichnenden Merkmale des Anspruches 1 gelöst. Durch diese Lösung wird auf besonders einfache Weise eine vollständige Entkopplung der Momente von den Kräften erreicht. Darüber hinaus werden zur Erfassung sämtlicher Momente und Kraftkomponenten lediglich sechs Kraftsensoren benötigt. Dies ist sowohl für den einfachen Aufbau und damit für die Kostenseite als auch für eine einfache Kalibrierung von Vorteil.

Bei einer bevorzugten Ausführungsform der Erfindung ist vorgesehen, daß die Kraftsensoren als Wägezellen ausgebildet sind. Diese robuste Art der Kraftsensoren läßt sich problemlos austauschen, wodurch eine optimale Anpassung der Sensoren an den interessierenden Meßbereich möglich ist. Besonders montagegerecht ist eine Ausführung, bei welcher die Kraftsensoren zwischen dem Fundament bzw. dem Grundgestell und einem Krafteinleitungselement angeordnet sind. Besonders zweckmäßig ist es, wenn das biegesteife Element als Dreieck ausgebildet ist, wobei ein Eckpunkt gemeinsamer Anlenkpunkt für je einen Stab der ersten sowie der zweiten Parallellenkeranordnung ist.

Um die Kräfte und Momente in den bzw. um die Koordinatenachsen eines kartesischen Koordinatensystems zu ermitteln, ist vorgesehen, daß die drei Ebenen, in welchen die biegesteifen Elemente und die Parallellenkeranordnungen vorgesehen sind, senkrecht aufeinanderstehen. Dabei wird jedem biegesteifen Element, also jeder Momentenabstützung, ein Kraftsensor zugeordnet, wenn das Moment um jede der drei Raumachsen ermittelt werden soll.

Bei einer Erfindungsausführung, bei welcher die Plattform einen winklig, insbesondere senkrecht, zur sich im Wesentlichen horizontal erstreckenden Plattformebene verlaufenden Abschnitt aufweist, an dem zwei der ersten Parallellenkeranordnungen angelenkt sind, werden unnötige Elastizitäten durch weitere Befestigungsmittel vermieden und außerdem wird ein gemeinsamer Befestigungsabschnitt sowohl für das Roll- als auch für das Nickmoment-Aufnahmemittel geschaffen.

Durch eine Anordnung der Kraftsensoren und ihrer Anlenkungen unterhalb der Plattform wird eine Verfälschung der Strömungsverhältnisse vermieden.

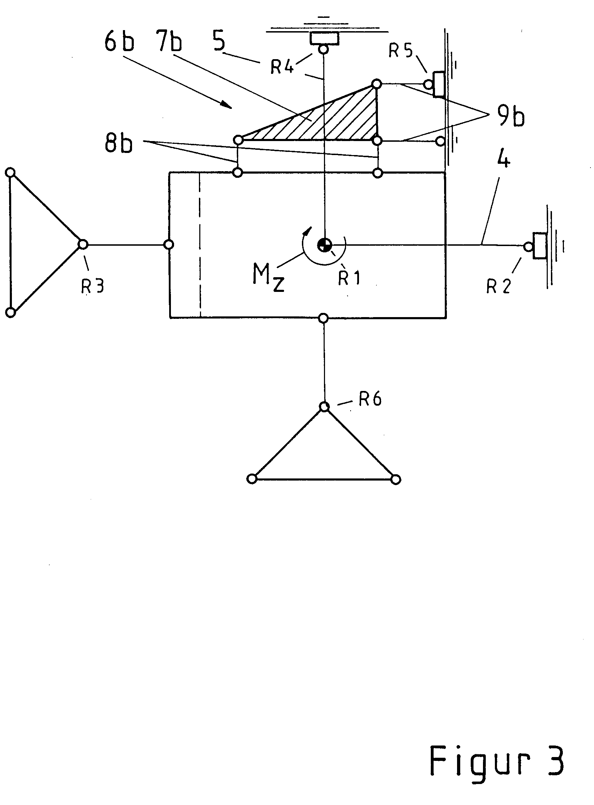

Weitere vorteilhafte Merkmale sowie die Funktion der Erfindung ergeben sich aus der nachstehenden Beschreibung eines Ausführungsbeispiels anhand der Zeichnung. Hierzu zeigt Figur 1 und Figur 2 jeweils eine Seitenansicht der erfindungsgemäßen Vorrichtung und Figur 3 die zugehörige Draufsicht.

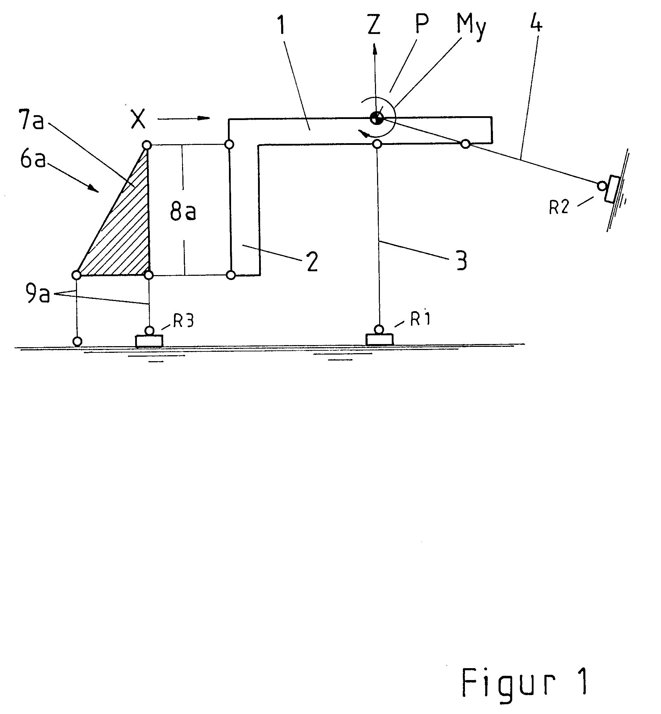

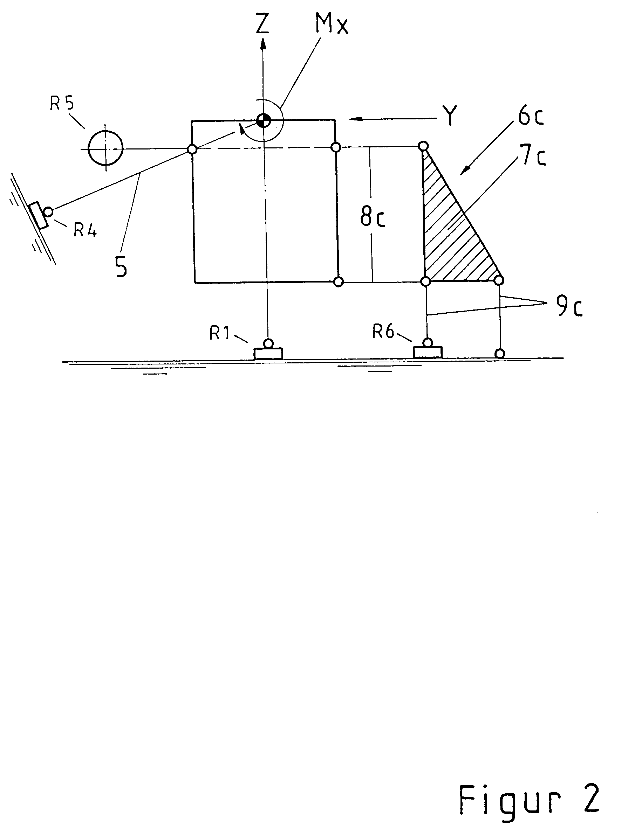

Wie insbesondere den Figuren 1 und 2 zu entnehmen ist, weist die Vorrichtung eine sich im Wesentlichen horizontal erstreckende Plattform 1 auf, der ein orthogonales, räumliches Koordinatensystem (x, y, z) zugeordnet ist, wobei die x-Achse in Längsrichtung der Plattform verläuft und die z-Achse vertikal verläuft. Die Plattform 1 ist mit einem rechtwinklig nach unten abzweigenden Abschnitt 2 versehen, so daß sie im wesentlichen eine L-förmige Gestalt hat. Die Plattform 1 ist auf den Stäben 3, 4, 5 gelagert, welche jeweils an beiden Enden Gelenke aufweisen, und deren Längsachsen sich in dem gemeinsamen Bezugspunkt P schneiden. Der Bezugspunkt P liegt - dies ist jedoch nicht zwingend Bedingung - in der Bodenebene der Plattform 1, also der nach oben gewandten Mantelfläche.

Der Stab 3 verläuft koaxial zur z-Achse; der Stab 4 liegt in der x-z-Ebene und ist gegenüber der x-Achse ein wenig nach unten verschwenkt, um bei Einsatz der Vorrichtung als Windkanalwaage nicht die Strömungsverhältnisse zu beeinflussen. Der Stab 5 ist schließlich in der y-z-Ebene angeordnet und aus den gleichen Gründen etwas aus der horizontalen Ebene um den Bezugspunkt P nach unten verschwenkt. Die von der Plattform 1 entfernten Enden der Stäbe 3, 4, 5 stützen sich über die ihnen jeweils zugeordneten Wägezellen R1, R2 bzw. R4 auf dem Fundament bzw. einem Grundrahmen ab.

Zur Aufnahme von an der Plattform 1 angreifenden Momenten sind drei Stützanordnungen 6a, 6b, 6c vorgesehen, welche jeweils den gleichen Aufbau aufweisen. Eine solche Stützanordung besitzt ein biegesteifes, als Übertragungshebel dienendes Element 7a, b bzw. c, welches über eine erste Parallellenkeranordnung 8a, 8b bzw. 8c gelenkig mit der Plattform 1 und über eine zweite Parallellenkeranordnung 9a, 9b bzw. 9c mit dem Fundament bzw. dem Grundrahmen verbunden ist.

Die Stützanordnung 6a und die Stützanordnung 6c ist am Abschnitt 2 der Plattform 1 angelenkt.

Dabei ist vorgesehen, daß die Parallellenkeranordnungen 8a, 9a der Stützanordnung 6a in der x-z-Ebene bzw. parallel zu dieser liegen. In der x-y-Ebene liegen die Parallellenkeranordnungen der Stützanordnung 6b, während die Parallellenkeranordnungen 8c, 9c der Stützanordnung 6c parallel zur y-z-Ebene verlaufen. Die Lenker der ersten Parallellenkeranordnungen 8a, 8b, 8c sind rechtwinklig zu denen der jeweils zugeordneten zweiten Parallellenkeranordnungen 9a, 9b bzw. 9c angeordnet.

Die Stützanordnungen 6a, 6b, 6c werden nur belastet, wenn an der Plattform 1 Momente angreifen; durch den Bezugspunkt P verlaufende Kräfte werden allein durch die Stäbe 3, 4, 5 aufgenommen. Zur Messung der Momente genügt es, wenn in einer Parallellenkeranordnung ein Kraftsensor angeordnet ist. Im Ausführungsbeispiel ist zwischen jeweils einem Lenker der Parallellenkeranordnungen 9a, 9b, 9c und dem Fundament eine Wägezelle R3, R5 bzw. R6 angeordnet. Die biegesteifen Elemente 7 besitzen im Ausführungsbeispiel aus Gründen der genauen Lagerung eine pyramidenförmige Gestalt, sie könnten jedoch beispielsweise auch dreieckförmig ausgebildet sein.

Wird die beschriebene Vorrichtung als Windkanalwaage in einem Strömungskanal eingesetzt und beispielsweise ein Kraftfahrzeug so auf der Plattform 1 plaziert, daß seine Längsrichtung entlang der x-Achse verläuft, so nehmen die Wägezellen R1, R2 und R4 die unter Anströmung entstehenden Kraftkomponenten, nämlich Auftriebskraft FZ, Widerstandkraft FX bzw. Seitenkraft FY auf. Die aerodynamischen Momente wie das Nickmoment My, das Giermoment Mz sowie das Rollmoment Mx werden von den Wägezellen R3, R5 bzw. R6 aufgenommen.

**Patentansprüche**

1. Vorrichtung zur Bestimmung von Kräften und Momenten, mit einer Plattform, die über Kraftsensoren an einem Fundament oder an einem Grundgestell abgestützt ist, dadurch gekennzeichnet, daß die Lagerung der Plattform (1) über drei Kraftsensoren (R1, R2, R4) erfolgt, deren jeweilige Hauptwirkungslinien durch einen gemeinsamen Bezugspunkt (P) führen, wobei von diesen drei Hauptwirkungslinien nur zwei in einer gemeinsamen Ebene liegen, daß ferner in drei nicht parallelen Ebenen, die keine gemeisame Schnittlinie besitzen, je eine erste und eine zweite Parallellenkeranordnung (8a, 8b, 8c; 9a, 9b, 9c), welche durch ein biegesteifes Element (7a, 7b, 7c) gekoppelt sind, vorgesehen ist, wobei die erste Parallellenkeranordnung (8a, 8b, 8c) jeweils an der Plattform (1) und die zweite Parallellenkeranordnung (9a, 9b, 9c) jeweils am Fundament oder Grundgestell befestigt ist, und wobei mindestens einem Lenkerelement ein Kraftsensor (R3, R5, R6) zugeordnet ist.

2. Vorrichtung nach Anspruch 1, dadurch gekennzeichnet, daß die Kraftsensoren (R1 bis R6) als Wägezellen ausgeführt sind.

3. Vorrichtung nach Anspruch 1 oder 2, dadurch gekennzeichnet, daß die Kraftsensoren (R1 bis R6) zwischen dem Fundament bzw. dem Grundgestell und einem Krafteinleitungselement (2, 3, 4, 9a, 9b, 9c) angeordnet sind.

4. Vorrichtung nach einem der vorhergehenden Ansprüche, dadurch gekennzeichnet, daß das biegesteife Element (7a, 7b, 7c) dreieckförmig ausgebildet ist.

5. Vorrichtung nach einem der vorhergehenden Ansprüche, dadurch gekennzeichnet, daß die drei Ebenen, in welchen die Parallellenkeranordnungen (8a, 9a, 8b, 9b, 8c, 9c) vorgesehen sind, senkrecht aufeinander stehen.

6. Vorrichtung nach einem der vorhergehenden Ansprüche, dadurch gekennzeichnet, daß jedem biegesteifen Element (7a, 7b, 7c) ein Kraftsensor (R3, R5, R6) zugeordnet ist.

7. Vorrichtung nach einem der vorhergehenden Ansprüche, dadurch gekennzeichnet, daß die Plattform (1) einen winklig, insbesondere rechtwinklig, zur sich im wesentlichen horizontal erstreckenden Plattformebene verlaufenden Abschnitt (2) aufweist, an dem zwei der ersten Parallellenkeranordnungen (8a, 8c) angelenkt sind.

8. Vorrichtung nach einem der vorhergehenden Ansprüche, dadurch gekennzeichnet, daß die Kraftsensoren (R1 bis R6) und ihre Anlenkungen unterhalb der Plattform vorgesehen sind.

Figur 1

Figur 2

Figur 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-A-2 624 647   (PFISTER WAAGEN GMBH) --- | 1 | G 01 L   5/16 G 01 M   9/00 |
| A,D | DE-A-2 926 213   (CARL SCHENK AG) --- | 1 | |
| A | DE-A-3 820 680   (CARL SCHENK AG) * ganze Schrift * ----- | 1 | |

| RECHERCHIERTE SACHGEBIETE (Int. Cl.5) |
|---|
| G 01 L   5/16 G 01 M   9/00 |

Der vorliegende Recherchenbericht wurde für alle Patentansprüche erstellt

| Recherchenort | Abschlußdatum der Recherche | Prüfer |
|---|---|---|
| BERLIN | 27-02-1992 | KOEHN G |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes
    Dokument

EPO FORM 1503 03.82 (P0403)